# EUROPEAN PATENT APPLICATION

(11) **EP 4 652 959 A1**
(43) Date of publication of application: **26.11.2025**
(21) Application number: 25176925.3
(22) Date of filing: 16.05.2025
(51) Int. Cl.: A61C 5/62, A61M 1/00, A61M 3/00

(54) **DENTAL SYRINGE**

(30) Priority: 19.05.2024 JP 2024081366
(71) Applicant: Shofu Inc., Kyoto-shi, Kyoto 605-0983 (JP)
(72) Inventor: MATSUMOTO, Akiko, Kyoto, 605-0983 (JP); KOBAYASHI, Hiroyuki, Kyoto, 605-0983 (JP); ANDO, Hitoshi, Kyoto, 605-0983 (JP)
(74) Representative: Eisenführ Speiser

(57) **Abstract**

To provide a dental syringe that can perform intuitive and smooth rotating operation of the operating portion to facilitate the rotating operation. To provide a dental syringe comprising a syringe body and a pushout rod, wherein the syringe body is provided with a nozzle for discharging a dental material, one end of the pushout rod is formed with an operating portion for rotating the pushout rod, and in a plane perpendicular to the longitudinal direction of the syringe body, the contour of the operating portion has a size that surrounds the contour of the syringe body.

## Description

### BACKGROUND OF THE INVENTION

### Field of the Invention

The present invention relates to a dental syringe in which dental material is housed and filled.

### Description of the Related Art

In a dental practice, in order to restore aesthetically and functionally a lost portion of a tooth by caries, breakages and the like, a treatment has been performed by a direct restoration using a dental composite resin after performing pretreatment with a dental adhesive material and/or an indirect restoration in which a prosthesis device consisting of ceramics or hard resin is mounted using a dental resin cement.

The dental filling composite resin and hard resin have been prepared by mixing a resin matrix including several types of polymerizable monomers, various filling materials such as an inorganic filler, an organic-inorganic composite filler, and a polymerization initiator with each other into a uniform paste form. A dental composite resin for filling has been used by filling into a tooth in the form of uncured paste, imparting anatomical form of a natural tooth with a dental instrument such as an instrument, and curing by irradiating light with a dental light irradiator or the like. On the other hand, a hard resin has been used to prepare a dental crown-shaped prosthesis device, and has been formed outside the mouth and cured by light irradiation using a dental light irradiator to complete the prosthesis device. The completed prosthesis device has been used by bonding to the cavity or abutment tooth with resin cement or other materials.

As such the dental syringe used as containers for housing paste, for example, those comprising a syringe body, a cap member and an pushout rod and having a core inside the container are known, as described in Japanese Unexamined Patent Application Publication No. 2010-162111.

In the dental syringe described in Japanese Unexamined Patent Application Publication No. 2010-162111, by holding the syringe body with one hand and rotating a handle (operating portion) provided on one end of the pushout rod with the other hand, the pushout rod is entered inside of the cylinder, and the core moves toward the tip. As a result, the dental viscous material inside the syringe body is pushed out from the nozzle provided at one end of the syringe body.

### SUMMARY OF THE INVENTION

### Technical Problem

In the dental syringe of Japanese Unexamined Patent Application Publication No. 2010-162111, the operating portion provided at one end of the pushout rod is configured as a flat plate shape. In such a flat plate shape operating portion, the operating portion has a directionality in the circumferential direction of the outer circumference surface (directionality in a plane perpendicular to the longitudinal direction of the syringe body). Therefore, in the case of performing the rotating operation of the operating portion, it is necessary to check the direction of extension of the flat plate shape operating portion visually or by groping, and to move the hand in accordance with the direction of extension of the flat plate shape operating portion.

In addition, it is not easy to rotate a portion near the center of rotation of the flat plate shape operating portion compared to a portion away from the center of rotation of the flat plate shape operating portion. Therefore, for example, in the case of gripping a portion near the center of rotation of the flat plate shape operating portion by groping, there is a case where it is necessary to move the operating position from a portion near the center of rotation of the operating portion to a portion away from the center of rotation.

Therefore, in the conventional dental syringe shown in Japanese Unexamined Patent Application Publication No. 2010-162111, it is impossible to perform intuitive and smooth rotating operation of the operating portion.

An object of the present invention is to provide a dental syringe that can perform intuitive and smooth rotating operation of the operating portion to facilitate the rotating operation.

### Solution to Problem

The dental syringe of the present invention comprises a syringe body and a pushout rod, wherein the syringe body is provided with a nozzle for discharging a dental material, one end of the pushout rod is formed with an operating portion for rotating the pushout rod, and in a plane perpendicular to the longitudinal direction of the syringe body, the contour of the operating portion has a size that surrounds the contour of the syringe body.

In the present invention, the operating portion may include a side surface, and the side surface may have a circumferential surface part.

In the present invention, the side surface of the operating potion may further have a flat surface portion.

In the present invention, at least a part of the flat surface part of the side surface of the operating portion may have a different color from a color of the circumferential surface part.

In the present invention, the circumferential surface part of the side surface of the operating portion may be provided with wrinkle-process.

In the present invention, the operating portion may have a flat surface part at one end on the opposite side of the nozzle side in the longitudinal direction of the syringe body.

In the present invention, a connecting portion may be provided between the pushout rod and the operating portion.

In the present invention, the side surface of the syringe body may not have a corner.

In the present invention, the side surface of the syringe body may consist only of a circumferential surface.

In the present invention, the syringe body may be provided with a cap member.

In the present invention, the cap member may comprise a flat surface part perpendicular to the longitudinal direction of the syringe body in the state of attaching the cap member to the syringe body.

In the present invention, the cap member may comprise a flat surface part on the side surface in the state of attaching the cap member to the syringe body.

In the present invention, the side surface of the operating portion may have an n-square shape, where n is an integer of 5 or more.

In the present invention, the syringe body may be filled with a dental material containing an acrylic polymerizable monomer and an inorganic filler.

### Advantageous Effects of Invention

The dental syringe of the present invention can perform intuitive and smooth rotating operation of the operating portion to facilitate the rotating operation.

### Brief description of drawings

[Fig. 1] Front view of dental syringe in one embodiment.
[Fig. 2] Rear view of dental syringe in one embodiment.
[Fig. 3] Plan view of dental syringe in one embodiment.
[Fig. 4] Bottom view of dental syringe in one embodiment.
[Fig. 5] Right side view of dental syringe in one embodiment.
[Fig. 6] Left side view of dental syringe in one embodiment.
[Fig. 7] Front view in the state of fully insert pushout rod.
[Fig. 8] Cross sectional view along with A-A line of Figure 5.
[Fig. 9] Front view of body portion of syringe body.
[Fig. 10] Cross sectional view along with B-B line of Figure 9.
[Fig. 11] Left side view of cap member and tip of dental syringe in the state of not fitting cap member to tip.
[Fig. 12] Cross sectional view along with C-C line of Figure 11.
[Fig. 13] Front view of pushout rod in the state of removing cap for operating portion.
[Fig. 14] Right side view of pushout rod in the state of removing cap for operating portion.
[Fig. 15] Front view of cap for operating portion.
[Fig. 16] Plan view of cap for operating portion.

### DETAILED DESCRIPTION OF THE PREFERRED EMBODIMENTS

Hereinafter, specific embodiments of the present invention will be described in detail. However, the present invention is not these embodiments.

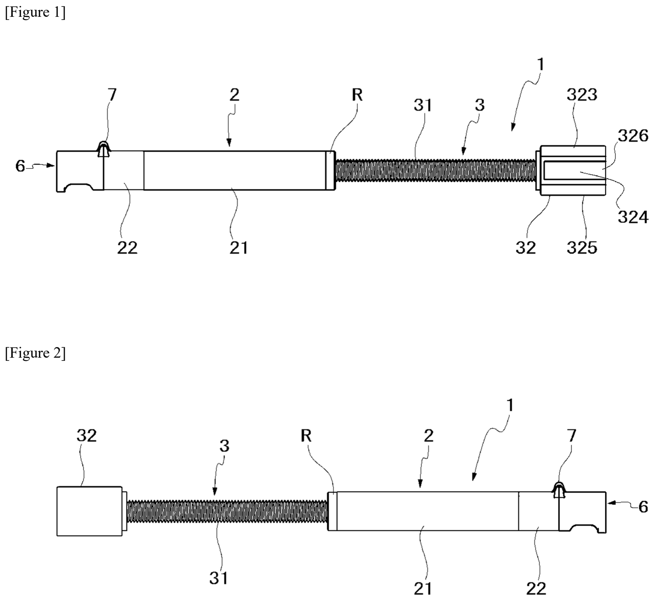

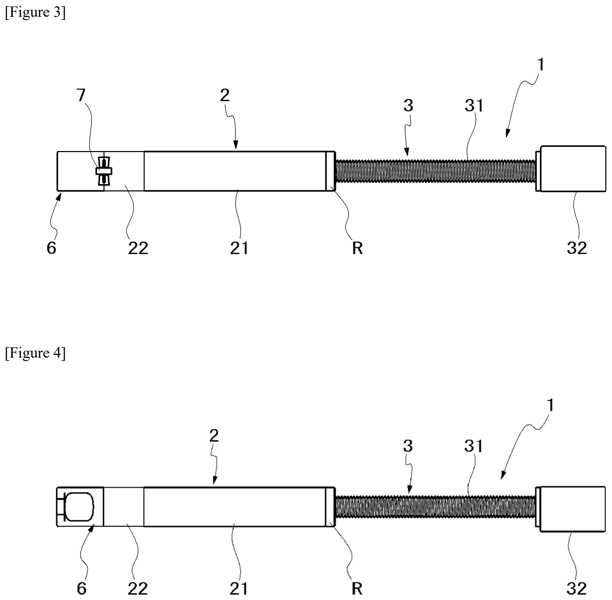

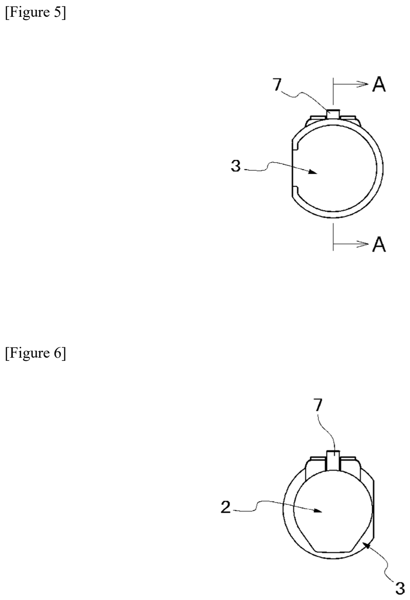

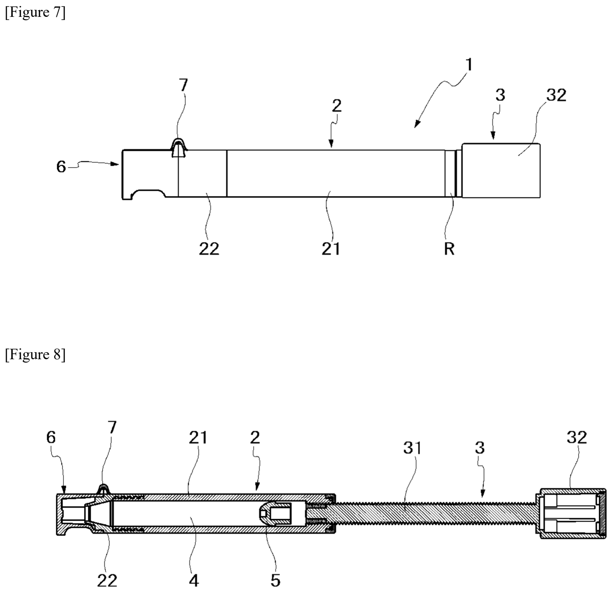

Figures 1 to 6 respectively show a front view, a rear view, a plan view, a bottom view, a right side view, and a left side view of a dental syringe 1 according to one embodiment of the present invention. Figure 7 is a front view showing the state that a pushout rod is fully inserted. Figure 8 is cross-sectional view along with A-A line of Figure 5. In Figure 8, some members are not shown as cross sections in order to facilitate understanding. The dental syringe 1 of the present embodiment comprises a syringe body 2 and a pushout rod 3. The syringe body 1 functions as a cylinder to be filled with dental material and can discharge the dental material from a nozzle provided at one end, which will be described later.

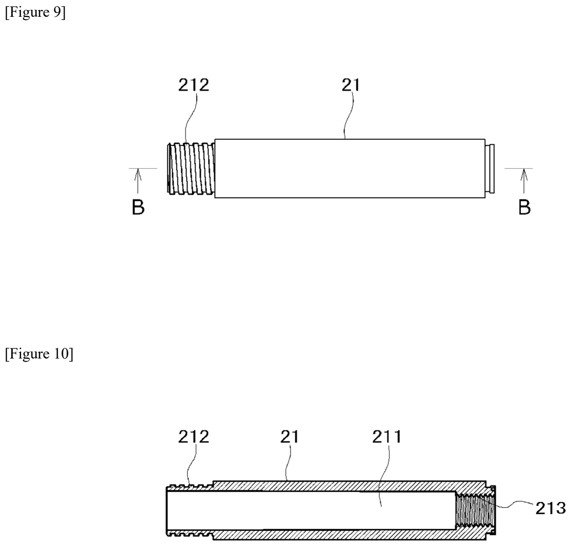

Figure 9 is a front view of a body portion 21 of the syringe body 2. Figure 10 is a cross sectional view along with B-B line of Figure 9. In the present embodiment, the inside of the syringe body 2 is filled with a dental material 4, which will be explained in detail later. The dental syringe 1 of the present embodiment further comprises a core 5, which will be described in detail later, inside the syringe body 2. The syringe body 2 of the present embodiment consists of the body portion 21 and a tip 22. The syringe body 2 may be made of, for example, a resin such as polyethylene, polyacetal, polypropylene, polyamide, vinyl chloride resin, nylon, phenolic resin, polyurethane, saturated polyester resin, melamine resin, polyvinylidene chloride, unsaturated polyester resin, polybutadiene, polystyrene, EVA (ethylene-vinyl acetate copolymer) resin, styrene resin, polymethyl pentene, methacrylic styrene, ABS (acrylonitrile-butadiene-styrene) resin and polycarbonate.

The body portion 21 of the syringe body 2 is formed in a tubular shape having a housing portion 211 inside, which can house the dental material 4. In particular, the body portion 21 of the present embodiment has a cylindrical shape in which the side surface consists of only a circumferential surface. Therefore, the body portion 21 of the present embodiment does not have a corner. The body portion 21 of the present embodiment is provided with wrinkle-process on the side surface. The housing portion 211 of the present embodiment is configured to have a columnar shape.

The outer surface of the one end side in the longitudinal direction of the body portion 21 (discharge side of dental material) is formed with a male screw 212. The inner surface of the other end side in the longitudinal direction of the body part 21 (the pushout rod 3 side) is formed with a female screw 213 which is threadedly engaged with the male screw on the outer surface of the pushout rod 3. In the present embodiment, the outer surface of the other end side in the longitudinal direction of the body part 21 (the pushout rod 3 side) is provided with a ring R. The ring R may be made of metallic material or alloy material such as copper, titanium, magnesium, brass, stainless steel and the like. By constructing the ring R from a metallic material or alloy material, it is possible to improve the aesthetics and identification. The ring R may also be made of a resin such as polyethylene, polyacetal, polypropylene, polyamide, vinyl chloride resin, nylon, phenolic resin, polyurethane, saturated polyester resin, melamine resin, polyvinylidene chloride, unsaturated polyester resin, polybutadiene, polystyrene, EVA (ethylene-vinyl acetate copolymer) resin, styrene resin, polymethylpentene, methacrylic styrene, ABS (acrylonitrile-butadiene-styrene) resin and polycarbonate. By constructing the ring R from resin, especially in the case that other parts are constructed from resin, uniformity of appearance can be maintained and separation at the time of disposal becomes unnecessary.

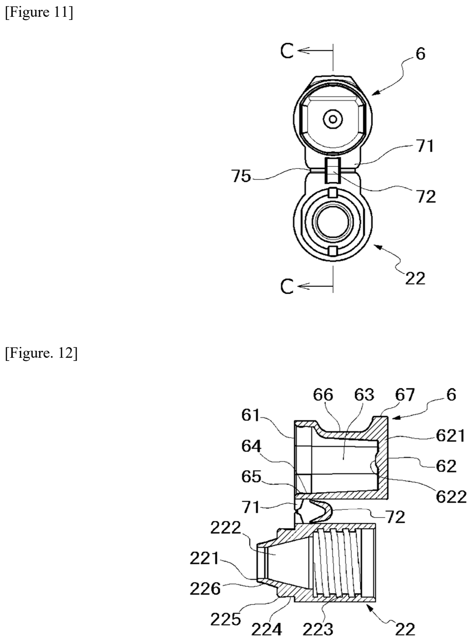

Figure 11 is a left side view of the cap member 6 and the tip 22 in the state where the cap member 6 described below is not fitted into tip 22 and Figure 12 is a Cross sectional view along with C-C line of Figure 11. In Figure 12, some members are not shown as cross sections in order to facilitate understanding. The tip 22 of the syringe body 2 of the present embodiment is provided with a nozzle 221 for discharging the dental material 4 housed in the housing portion 211 of the body portion 21, and the side surface is formed in a cylindrical shape so that the diameter is substantially the same as the side surface of the body portion 21 of the syringe body 2. Therefore, the syringe body 2 of the present embodiment does not have unevenness in the side surface. In the present embodiment, tip 22 is provided with wrinkle-process on the side surface that has substantially the same diameter as the side surface of the body portion 21 of the syringe body 2.

The tip 22 of the syringe body 2 of the present embodiment is provided a nozzle 221 for discharging the dental material 4 housed in the housing portion 211 of the body portion 21, at one end in the longitudinal direction of the syringe body 2. The inside of the tip 22 of the syringe body 2 is provided with a tip-side housing portion 222 that is connected to the housing portion 211 of the body portion 21, serves as a flow path for the dental material 4 housed in the housing portion 211 of the body portion 21 as the dental material 4 moves toward the nozzle 221 and can also house the dental material 4. The tip-side housing portion 222 of the present embodiment is configured in a conical trapezoidal shape tapering toward the nozzle 221.

The tip 22 of the syringe body 2 of the present embodiment is formed with a female screw 223 on the inner circumference surface of the other end side in the longitudinal direction of the syringe body 2, with which the male screw 212 of the body portion 21 is to be threadedly engaged. In the present embodiment, the body portion 21 and the tip 22 of the syringe body 2 can be connected and fixed by threadedly engaging the male screw 212 of the body portion 21 and the female screw 223 of the tip 22, but the connection and the fix are not limited to threadedly engaging and may be adhesion, welding, intermeshing and the like.

The syringe body 2 of the present embodiment is provided with a cap member 6 on the tip 22. In the present embodiment, the cap member 6 is attached to the tip 22 by an attachment member 7 that connects the outer circumference surface of the tip 22 to the outer circumference surface of the cap member 6. The cap member 6 comes into a state of covering the nozzle 221 by fitting to the tip 22. To achieve such a fitting state, the tip 22 is provided with an engagement portion 224 on all around of the side surface of outer radial side of the truncated cone of the tip side housing portion 222 having a truncated cone shape. In particular, the engagement portion 224 of the present embodiment is formed with a bulge portion 225 on one end side (discharge side of dental material) in the longitudinal direction of the body portion 21 for preventing unintentional release of the fitting state. The bulge portion 225 of the present embodiment is formed so as to bulge outwardly in the radial direction of the truncated cone of the tip side housing portion 222. In the present embodiment, the bulge portion 225 is formed at two locations including one closest to the attachment member 7 and the other farthest away from attachment member 7. In the present embodiment of tip 22, the members from the engagement portion 224 to the nozzle 221 are connected by a connecting surface 226 having a side surface having a truncated cone shape.

The cap member 6 may be made of, for example, a resin such as polyethylene, polyacetal, polypropylene, polyamide, vinyl chloride resin, nylon, phenolic resin, polyurethane, saturated polyester resin, melamine resin, polyvinylidene chloride, unsaturated polyester resin, polybutadiene, polystyrene, EVA (ethylene-vinyl acetate copolymer) resin, styrene resin, polymethyl pentene, methacrylic styrene, ABS (acrylonitrile-butadiene-styrene) resin and polycarbonate. The cap member 6 of the present embodiment is made of the same material as the syringe body 2. The cap member 6 of the present embodiment is formed in a hollow cylindrical shape so that the side surface has substantially the same diameter as the side surface of the tip 22 of the syringe body 2. In present embodiment, the cap member 6 is provided with wrinkle-process on the side surface that has substantially the same diameter as the side surface of the tip 22 of the syringe body 2. The cap member 6 of the present embodiment does not have unevenness in the portion of the side surface that has substantially the same diameter as the side surface of the tip 22 of the syringe body 2.

The cap member 6 of the present embodiment has an opening 61 at the other end side in the longitudinal direction of the body portion 21 (push rod 3 side) into which the tip 22 is inserted and has a flat plate portion 62 at one end side (discharge side of dental material) in the longitudinal direction of the body portion 21, in the state that the cap member 6 is attached to the syringe body 2,. This flat plate portion 62 has a plane surface 621 on the outer circumference side that is perpendicular to the longitudinal direction of the syringe body 2 in the state of attaching the cap member 6 to the syringe body 2. In present embodiment, the cap member 6 is provided with wrinkle-process on the plane surface 621. The flat plate portion 62 comprises a bulge portion 622 at the center of the inner circumferential side.

The inside of the cap member 6 is provided with a housing portion 63 that can house a portion of the tip 22 in the state of attcahing the cap member 6 to the syringe body 2. The housing portion 63 of the present embodiment is configured in a conical trapezoidal shape tapering toward the flat plate portion 62.

The cap member 6 of the present embodiment is formed with an engagement portion 64 in order to realize a fitting state in which the cap member 6 is fitted to the tip 22. In the present embodiment, the inner circumferential surface of the other end side (pushout rod 3 side) in the longitudinal direction of the body portion 21 in the state of attaching the cap member 6 to the syringe body 2 constitutes the engagement portion 64. In particular, the engagement portion 64 of the present embodiment is formed with a bulge portion 65 on the other end side (pushout rod 3 side) in the longitudinal direction of the body part 21 for preventing unintentional release of the fitting state. The bulge portion 65 of the present embodiment is formed to bulge toward the inner side in the radial direction of the truncated cone of the housing portion 63.

In the present embodiment, by engaging the engagement portion 64 of the cap member 6 and the engagement portion 224 of the tip 22, the cap member 6 is fitted to the tip 22 to realize the state that the cap member 6 covers the nozzle 221. In particular, in the present embodiment, the engagement portion 224 is formed with the bulge portion 225 and the engagement portion 64 is formed with the bulge portion 65. Therefore, when realizing and releasing the state in which the cap member 6 covers the nozzle 221, the bulge portion 65 of the engagement portion 64 must overcome the bulge portion 225 of the engagement portion 224. Thus, in present embodiment, unintentionally release of the state in which the cap member 6 is fitted to the tip 22 and unintentionally release of the state in which the cap member 6 covers the nozzle 221 are prevented.

The cap member 6 of the present embodiment is formed with a concave portion 66 on the outer circumference surface of the side facing the attachment member 7, which is concave toward the inner side in the radial direction. This concave portion 66 can be used as a finger-hold portion in the case of releasing the state in which the cap member 6 covers the nozzle 221, that is, in the case of releasing the state in which the cap member 6 is fitted into the tip 22.

In the present embodiment, the cap member 6 is formed with a flat surface part of side surface side 67 on the side surface in the state of attching the cap member 6 to the syringe body 2. In the present embodiment, the flat surface part of side surface side 67 is formed on the side of the flat plate portion 62. Specifically, the flat surface part of side surface side 67 is formed by the bulge of a portion of the flat plate portion 62 having a disc shape outward in the radial direction of the disc shape. Therefore, the flat surface part of side surface side 67 of the present embodiment is located radially outwardly of the other portion of the side surface of the flat plate portion 62.

As shown in Figures 11 and 12, the attachment member 7 of the present embodiment consists of a pair of first mounting members 71 and a second mounting member 72 located between the pair of first mounting members 71.

Each of the first attachment member 71 connects the outer surface of one end side (discharge side of dental material) in the longitudinal direction of the tip 22 and the outer surface of the other end side (pushout rod 3 side) in the longitudinal direction of the body portion 21 of the cap member 6 in the state of attaching the cap member 6 to the syringe body 2. The first attachment member 71 in the present embodiment includes an arm member 71a provided on the outer surface of one end side (discharge side of dental material) in the longitudinal direction of the tip portion 22, an arm member 71b provided on the outer surface of the other end side (pushout rod 3 side) in the longitudinal direction of the body portion 21 of the cap member 6, and a thin-walled member 71c connecting the arm members 71a and 71b.

The second attachment member 72 connects the outer surface of one end side (discharge side of dental material) in the longitudinal direction of the tip 22 and the outer surface of the other end side (pushout rod 3 side) in the longitudinal direction of the body portion 21 of the cap member 6 in the state of attaching the cap member 6 to the syringe body 2. The second attachment member 72 in the present embodiment comprises a thin-walled arm member 72a provided on the outer surface of the one end side (discharge side of dental material) in the longitudinal direction of the tip 22 and a thin-walled arm member 72b provided on the other end side (pushout rod 3 side) in the longitudinal direction of the body portion 21 of the cap member 6, and a thick-walled elastic member 72c having a substantially U-shape and connecting the thin-walled arm member 72a and the thin-walled arm member 72b.

In the present embodiment, the thin-walled arm member 72a is provided on the outer surface of the tip 22 on the other end side (pushout rod 3 side) in the longitudinal direction of the body portion 21 than the arm member 71a of the pair of first attachment members 71 in the state of being attached to the syringe body 2. The thin-walled arm member 72b is provided on the outer surface of the cap member 6 on the other end side (pushout rod 3 side) in the longitudinal direction of the body part 21 than the arm member 71b of the pair of first attachment members 71 in the state of being attached to the syringe body 2.

The thick-walled elastic member 72c of the second attachment member 72 can change its spring force by changing its wall thickness, opening angle and attachment position.

The attachment member 7 is formed so that the thick elastic member 72c of the second attachment member 72 opens when the cap member 6 rotates around the thin-walled member 71c of the pair of the first attachment members 71 from the state where the cap member 6 is fitted into the tip 22, the thick-walled elastic member 72c of the second attachment member 72 rapidly returns to its original state when the cap member 6 opens about 90°, and the thick-walled elastic member 72c of the second attachment member 72 stands still when the cap member 6 is opened approximately 180 degrees. Because the thick-walled elastic member 72c has thick-wall and has a large spring force, it is possible to rapidly perform the opening and closing action and to keep the cap member 6 stable in the open state. Therefore, the cap member 6 does not close during the pushout operation of the dental material 4.

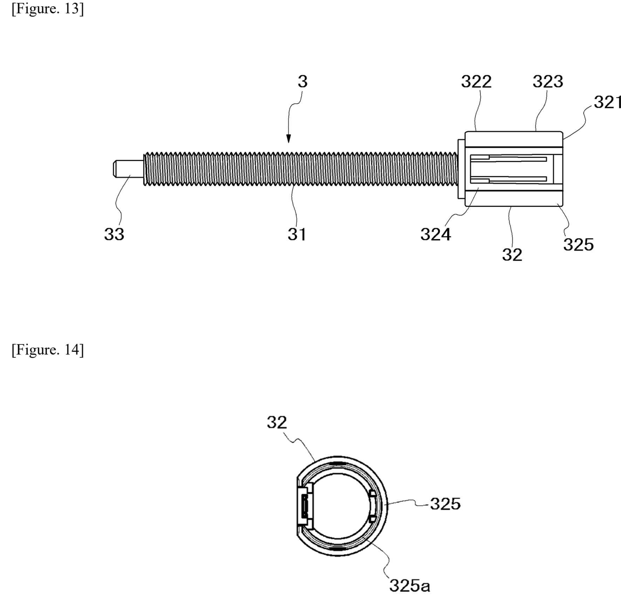

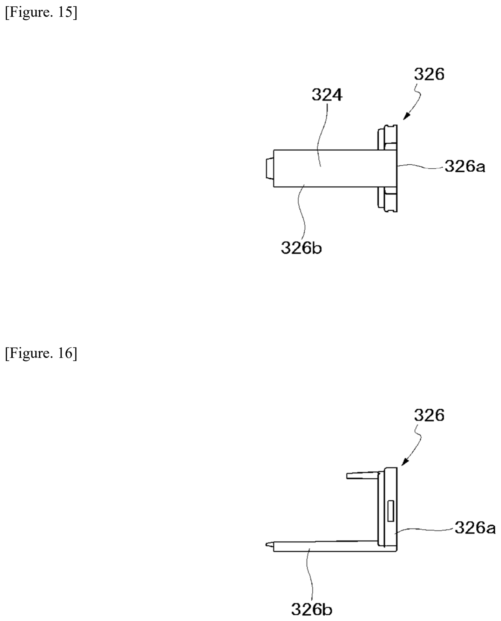

Figure 13 shows a front view of the pushout rod 3 in the state of removing the cap for operating portion. Figure 14 shows a right side view of the pushout rod 3 in the state of removing the cap for operating portion. Figure 15 shows a front view of the cap for operating portion. Figure 16 shows a plane view of the cap for operating portion. The pushout rod 3 has a threaded portion 31 which is formed with a male screw over almost its entire length threadedly engaged with the female screw 213 of the body portion 21 of syringe body 2, and an operating portion 32 which is formed at one end of the threaded portion 31. The operating portion 32 is operated when the pushout rod 3 is rotated. The other end of the pushout rod 3 is formed with a protruding portion 33 that fits into a core 5.

In the operating portion 32 of the present embodiment, the contour of the operating portion 32 has a size that surrounds the contour of the syringe body 2 in the plane perpendicular to the longitudinal direction of the syringe body 2. Specifically, as shown in Figure 5, when the dental syringe of the present embodiment in the state of attaching the cap member 6 to the syringe body 2 is viewed from the other end side (pushout rod 3 side) in the longitudinal direction of the body part 21, the contour of the syringe body 2 is within the area enclosed by the contour of the operating portion 32 and cannot be visually confirmed. As shown in Figure 6, when the dental syringe of the present embodiment in the state of attaching the cap member to the syringe body 2 is viewed from the one end side (discharge side of dental material) in the longitudinal direction of the body portion 21, all of the contour of the operating portion 32 can be visually confirmed. In the present specification, "having a size that surrounds the contour" means not only the case that one contour is within the area enclosed by the other contour, but also the case that a part of one contour overlaps the other contour and the remainder of one contour is within the area enclosed by the other contour.

The operating portion 32 of the present embodiment is configured in a columnar shape having a flat surface part 321 formed at the other end side (pushout rod 3 side) in the longitudinal direction of the body portion 21 and a side surface 322 having circumferential shape. That is, the operating portion 32 of the present embodiment has the circumferential surface part 323 on the side surface 322.

In the present embodiment, the side surface 322 of the operating portion 32 is formed with a flat surface part 324. In the present embodiment, the circumferential surface part 323 of the side surface 322 and the flat surface part 324 of the side surface 322 have different colors.

In present embodiment, the operating portion 32 consists of a tubular body portion 325 having a side surface which has an arcuate surface shape, and a cap 326 for operating portion, which constitutes a portion of the flat surface part 321 of the operating portion 32 and a portion of the side surface 322.

The body portion 325 is connected with a threaded portion 31 at one end in the longitudinal direction of the body portion 21. The body portion 325 is formed with a concave portion 325a housing the disc portion of the cap 326 for operating portion, at the other end of the body portion 325 in the longitudinal direction of the body portion 21 of the syringe body 2. Both ends of the arcuate surface of the side surface of the body portion 325 are constituted to be able to house the flat plate-shped portion of the cap 326 for operating portion.

The cap for operating portion 326 has a disk portion 326a which is housed in the recess portion 325a of the body portion 325, and a flat plate-shaped portion 326b which is formed to extend perpendicularly to the disk portion 326a.

In the above embodiment, the flat surface part 321 of the operating portion 32 is constituted by the other end of the body portion 325 in the longitudinal direction of the body portion 21 of the syringe body 2 and the disc portion of the cap 326 for operating portion. The side surface 322 of the operating portion 32 is constituted by the side surface having arcuate surface shape of the body portion 325 and the flat plate-shaped portion 326b of the cap 326 for operating portion.

In the cap 326 for operating portion of the above embodiment, the disk portion 326a and the flat plate-shaped portion 326b have the same color. However, the disk portion 326a and the flat plate-shaped portion 326b may have different colors. In the above embodiment, the entire of the disk portion 326a and the flat plate-shaped portion 326b are configured to have a different color from the body portion 325, but a portion of the disk portion 326a and flat plate-shaped portion 326b may be configured to have a different color from the body portion 325 and may be configured to have the same color as the body portion 325.

In the cap 326 for operating portion of the present embodiment, only the outer surface of the body portion 325 is provided with wrinkle-process. Therefore, the circumferential surface part of the side surface 32 of the operating portion 32 of the present embodiment is provided with wrinkle-process.

The operating portion in the present embodiment is connected to the pushout rod via a connecting portion formed at the end portion of the pushout rod side.

The core 5 is housed in the inside of the body portion 21 of the syringe body 2 and has a concave portion into which the protruding portion 33 of the pushout rod 3 fits. The core 5 moves toward the tip side of the syringe body 2 according to the rotation of the pushout rod 3 and serves as a piston for pushing out the dental material 4 that is pressed into the inside of the syringe body 2.

The dental material 4, for example, may contain a polymerizable monomer and an inorganic filler. Specific examples of the inorganic filler include quartz, amorphous silica, aluminum silicate, aluminum oxide, titanium oxide, zirconium oxide, various glasses (including a glass by a melting method, a synthetic glass by a sol-gel method, and a glass produced by a gas phase reaction), calcium carbonate, talc, kaolin, clay, mica, aluminum sulfate, calcium sulfate, barium sulfate, calcium phosphate, hydroxyapatite, silicon nitride, aluminum nitride, titanium nitride, silicon carbide, boron carbide, calcium hydroxide, strontium hydroxide and zeolite. Among them, an aluminosilicate glass, borosilicate, aluminoborate and boroaluminosilicate glasses, and the like including sodium, strontium, barium, a heavy metal such as lanthanum, and/or fluorine are preferable. The average particle size of such an inorganic filler is not particularly limited, and is preferably in the range from 0.1 to 10 µm, more preferably in the range from 0.3 to 5 µm.

An ultrafine particle inorganic filler such as Aerosil produced by a gas phase method or a silica-zirconia oxide particle produced in a solution of a sol-gel reaction or the like can also be used. A cohesive inorganic filler in which such ultrafine particles aggregate, or the like is also used without any problem. The cohesive inorganic filler are classified as an ultrafine particulate inorganic filler in the case of being crushed to have 1 nm to 300 nm particle diameters, and are classified as an inorganic filler in the case of not being crushed not to have 1 nm to 300 nm particle diameters. The average particle diameter of the ultrafine particulate inorganic filler is from 1 nm to 300 nm. The ultrafine particle inorganic filler is, but not limited, preferably colloidal silica (product name: Aerosil R972, Aerosil 200, Aerosil 380 or Aerosil 50 manufactured by Nippon Aerosil Co., Ltd., 5 to 50 nm).

As the inorganic filler, an organic-inorganic composite filler in which an organic polymer contains an inorganic particle can also be used. The inorganic particles to be contained in the organic polymer are not specifically limited, and those known in the art may be used. Examples of the inorganic particles include particles of the inorganic fillers discussed above. The method for producing the organic-inorganic composite filler is not particularly limited, and any method can also be adopted. Examples include a method including subjecting the surface of the inorganic particle to microencapsulation or grafting by an organic substance, a method including introducing a polymerizable functional group or a polymerizable initiation group to the surface of the inorganic particle and then subjecting the resultant to radical polymerization, and a method including pulverizing a polymer bulk including the inorganic particle, previously produced.

The average particle diameter of the organic-inorganic composite filler is preferably in a range from 1 to 100 µm. More preferably, the average particle diameter is in a range from 3 to 50 µm and, further preferably in a range from 5 to 10 µm. Such inorganic, organic and organic-inorganic composite fillers can be each used singly or in combinations of several types.

The inorganic composite fillers can be used with the particle surface thereof being subjected to a surface treatment by a known method. Examples include a surfactant, an aliphatic acid, an organic acid, an inorganic acid, a silane coupling agent, a titanate coupling agent and polysiloxane. Such a surface treatment method is preferable from the viewpoints of enhancing wettability between a resin component and the filler surface and imparting various excellent characteristics, and the surface treatment can be appropriately selected depending on the characteristics demanded. The filler surface is subjected to a surface treatment by a special surface treatment agent and/or a special surface treatment method for the purpose of multi-functionalizing the filler, without any limitation.

As the silane coupling agent, there can be preferably used, not particularly limited, methyltrimethoxysilane, methyltriethoxysilane, methyltrichlorosilane, dimethyldichlorosilane, trimethylchlorosilane, hexamethyldisilazane, vinyltrimethoxysilane, vinyltriethoxysilane, vinyltrichlorosilane, vinyltriacetoxysilane, vinyltris(β-methoxyethoxy)silane, γ-methacryloyloxypropyltrimethoxysilane, γ-methacrloyloxypropyltris(β-methoxyethoxy)silane, γ-chloropropyltrimethoxysilane, γ-chloropropylmethyldimethoxysilane, γ-glycidoxypropyltrimethoxysilane, γ-glycidoxypropylmethyldiethoxysilane, β-(3,4-epoxycyclohexyl)ethyltrimethoxysilane, N-phenyl-γ-aminopropyltrimethoxysilane and hexamethyldisilazane. Particularly preferably, methyltrichlorosilane, dimethyldichlorosilane and hexamethyldisilazane are used.

An organic solvent is preferably a volatile water-soluble organic solvent. As the volatile water-soluble organic solvent, there can be exemplified methanol, ethanol, n-propanol, isopropyl alcohol, acetone, methyl ethyl ketone and the like. As required, these organic solvents can be used in a plural kinds being mixed together. By taking toxicity to living body into consideration, it is desired to use ethanol, isopropyl alcohol and acetone.

The polymerizable monomer may be, without any limitation, known monofunctional or multifunctional acrylic polymerizable monomers that are generally used for composite material. Preferable polymerizable monomers include polymerizable monomers having an acryloyl and/or methacryloyl group.

Examples of polymerizable monomers having no acidic group include:
monofunctional monomers (non-crosslinkable monomers): such as (meth)acrylic acid esters such as methyl (meth)acrylate, ethyl (meth)acrylate, butyl (meth)acrylate, hexyl (meth)acrylate, tetrahydrofurfuryl (meth)acrylate, 2-hydroxyethyl (meth)acrylate, grycidyl (meth)acrylate, lauryl (meth)acrylate, cyclohexyl (meth)acrylate, benzil (meth)acrylate, allyl (meth)acrylate, 2-ethoxyethyl (meth)acrylate, methoxy polyethylene glycol (meth)acrylate, glycerol (meth)acrylate and isobornyl (meth)acrylate; silane compounds such as γ-(meth)acryloyloxy propyltrimethoxysilane and γ-(meth)acryloyloxy propyltriethoxysilane; nitrogen-containing compounds such as 2-(N,N-dimethylamino)ethyl (meth)acrylate, N-methylol (meth)acrylamide and diacetone (meth)acrylamide,
aromatic bifunctional monomers (crosslinkable monomers): such as 2,2-bis (4-(meth)acryloyloxy phenyl) propane, 2,2-bis (4-(3-(meth)acryloyloxy-2-hydroxypropoxy) phenyl) propane, 2,2-bis (4-(meth)acryloyloxy ethoxyphenyl) propane, 2,2-bis (4-(meth)acryloyloxy diethoxyphenyl) propane, 2,2-bis (4-(meth)acryloyloxy tetraethoxyphenyl) propane, 2,2-bis (4-(meth)acryloyloxy pentaethoxyphenyl) propane, 2,2-bis (4-(meth)acryloyloxy dipropooxyphenyl) propane, 2-(4-(meth)acryloyloxy ethoxyphenyl)-2-(4-(meth)acryloyloxy diethoxyphenyl) propane, 2-(4-(meth)acryloyloxy diethoxyphenyl)-2-(4-(meth)acryloyloxy triethoxyphenyl)propane, 2-(4-(meth)acryloyloxy dipropoxyphenyl)-2-(4-(meth)acryloyloxy triethoxyphenyl)propane, 2,2-bis(4-(meth)acryloyloxy dipropoxyphenyl)propane and 2,2-bis(4-(meth)acryloyloxy isopropoxyphenyl)propane,
aliphatic bifunctional monomers (crosslinkable monomers): such as 2-hydroxy-3-acryloyloxypropyl methacrylate, hydroxypivalic acid neopentylglycol di(meth)acrylate, ethyleneglycol di(meth)acrylate, diethyleneglycol di(meth)acrylate, triethyleneglycol di(meth)acrylate, butyleneglycol di(meth)acrylate, polyethyleneglycol di(meth)acrylate, neopentylglycol di(meth)acrylate, propyleneglycol di(meth)acrylate, 1,3-butanediol di(meth)acrylate, 1,4-butanediol di(meth)acrylate, 1,6-hexanediol di(meth)acrylate, and glycerin di(meth)acrylate,
trifunctional monomers (crosslinkable monomers): such as trimethylolpropane tri(meth)acrylate, treimethylolethane tri(meth)acrylate, trimethylolmethane tri(meth)acrylate and pentaerythritol tri(meth)acrylate,
tetrafunctional monomers (crosslinkable monomers): such as pentaerythritol tetra(meth)acrylate and ditrimethylolporpane tetra (meth)acrylate.

Examples of a urethane type polymerizable monomer include di(meth)acrylates having a bifunctional or tri- or higher functional urethane bond, derived from an adduct of a hydroxyl group-containing polymerizable monomer such as 2-hydroxyethyl (meth)acrylate, 2-hydroxypropyl (meth)acrylate or 3-chloro-2-hydroxypropyl (meth)acrylate and a diisocyanate compound such as methylcyclohexane diisocyanate, methylenebis(4-cyclohexylisocyanate), hexamethylene diisocyanate, trimethylhexamethylene diisocyanate, isophorone diisocyanate, diisocyanate methyl methylbenzene or 4,4-diphenylmethane diisocyanate.

The polymerizable monomers may include only monofunctional polymerizable monomers, and may additionally include polyfunctional polymerizable monomers. A preferable polymerizable monomer includes an aromatic compound of a bifunctional polymerizable monomer and an aliphatic compound of a bifunctional polymerizable monomer. A more preferable polymerizable monomer includes 2,2-bis(4-(3-methacryloyloxy-2-hydroxypropoxy)phenyl)propane (Bis-GMA) and triethylene glycol dimethacrylate (TEGDMA).

In the present invention, the polymerizable monomers may include polymerizable monomers containing an acid group such as phosphoric acid group, carboxylic acid group, phosphonic acid, sulfonic acid group or the like in the molecule as a part or the whole of the polymerizable monomers in order to impart adhesive property to the tooth substance and a nonprecious metal. In order to enhance adhesiveness to a noble metal, the polymerizable monomer may include a polymerizable monomer containing a sulfur atom in the molecule.

Specific examples of the above described polymerizable monomer include carboxylic acid group-containing polymerizable monomers: (meth)acrylic acid, 1,4-di (meth) acryloyloxyethyl pyromellitic acid, 6-(meth) acryloyloxy naphthalene-1,2,6-tricarboxylic acid, N-(meth)acryloyl-p-aminobenzoic acid, N-(meth) acryloyl-5-aminosalicylic acid, 4-(meth) acryloyloxyethyl trimellitic acid and its anhydride, 4-(meth) acryloyloxybutyl trimellitic acid and its anhydride, 2-(meth) acryloyloxy benzoic acid, β-(meth) acryloyloxyethyl hydrogen succinate, β-(meth) acryloyloxyethyl hydrogen maleate, 11-(meth) acryloyloxy-1,1-undecanedicarboxylic acid, p-vinylbenzoic acid and the like; phosphate group-containing monomers: 2-(meth) acryloyloxyethyl dihydrogen phosphate, 3-(meth) acryloyloxypropyl dihydrogen phosphate, 10-(meth) acryloyloxydecyl dihydrogen phosphate, bis (2-(meth) acryloyloxyethyl) hydrogen phosphate, 2-(meth) acryloyloxyethyl phenyl hydrogen phosphate and the like; sulfonic acid group-containing monomers: 2-(meth) acrylamido-2-methylpropanesulfonic acid, 4-(meth) acryloyloxy benzenesulfonic acid, 3-(meth) acryloyloxy propanesulfonic acid and the like; and sulfur atom-containing polymerizable monomers: (meth) acrylates having a triazinethiol group, (meth) acrylates having a mercapto group, (meth) acrylates having a polysulfide group, (meth) acrylates having a thiophosphate group, (meth) acrylates having a disulfide cyclic group, (meth) acrylates having a mercaptodiathiazole group, (meth) acrylates having a thiouracil group, (meth)acrylates having a thiirane group and the like. These polymerizable monomers may be used singly or as a mixture of two or more.

The dental material may contain a polymerization initiator. A known radical generator may be used as a polymerization initiator. Polymerization initiators are generally classified into chemical polymerization initiators that initiates polymerization by mixing the same with the monomers upon use, thermal polymerization initiators that initiates polymerization by heating or warming the composition, and photoinitiators that initiates polymerization by light irradiation.

Among such polymerization initiator, examples of chemical polymerization initiators include redox type polymerization initiator systems comprising an organic peroxide/an amine compound or an organic peroxide/an amine compound/a sulfinic acid salt, or an organic peroxide/an amine compound/a borate compound, and organometal type initiator systems that initiate polymerization by reacting with oxygen or water.

Examples of the aforementioned organic peroxides may include benzoylperoxide, parachlorobenzoylperoxide, 2,4-dichlorobenzoyl peroxide, acetyl peroxide, lauroyl peroxide, tertiary-butyl peroxide, cumene hydroperoxide, 2,5-dihydroperoxy-2,5-dimethylhexane, methyl ethyl ketone peroxide, and tertiary-butyl peroxide benzoate.

Examples of the aforementioned amine compounds may include a secondary or tertiary amine in which an amine group is bound to an aryl group, and particular examples thereof are p-N,N-dimethyltoluidine, N,N-dimethylaniline, N-β-hydroxyethylaniline, N,N-di (β-hydroxyethyl) aniline, p-N,N-di (β-hydroxyethyl) toruidine, N-methylaniline, and p-N-methyltoluidine.

Examples of the aforementioned sulfuric acid salts may include sodium benzenesulfinate, lithium benzenesulfinate, and sodium p-toluenesulfinate. Examples of the aforementioned borate compounds include, trialkylphenylboron, and a sodium salt, a lithium salt, a potassium salt, a magnesium salt, a tetrabutyl ammonium salt and a tetramethyl ammonium salt of trialkyl (p-fluorophenyl)boron (wherein the alkyl group is n-butyl group, n-octyl group, n-dodecyl group or the like).

Examples of the aforementioned organometal type polymerizable initiators may include organic boron compounds such as triphenylborane, tributylborane, and a partial oxide of tributylborane.

Azo compounds such as azobisisobutyronitrile, methyl azobisisobutyrate and azobiscyano valeric acid may be used as a thermal polymerization initiator among the polymerization initiator in addition to the aforementioned organic peroxide.

The photoinitiator as the polymerization initiator may be a photosensitizer. The photosensitizer may be used alone or in combination with a photopolymerization promotor. Specific examples of the photosensitizers may include α-diketones such as benzil, camphorquinone, α-naphtil, acetonaphtone, p,p'-dimethoxybenzil, p,p'-dichlorobenzylacetyl, pentadione, 1,2-phenanthrenquinone, 1,4-phenanthrenquinone, 3,4-phenanthrenquinone, 9,10-phenanthrenquinone and naphthoquinone; benzoin alkyl ethers such as benzoin, benzoin methyl ether and benzoin ethyl ether; thioxanthones such as thioxanthone, 2-chlorothioxanthone, 2-methylthioxanthone, 2-isopropylthioxanthone, 2-methoxythioxanthone, 2-hydroxythioxanthone, 2,4-diethylthioxanthone and 2,4-diisopropylthioxanthone; benzophenones such as benzophenone, p-chlorobenzophenone and p-methoxybenzophenone; acylphosphineoxides such as 2,4,6-trimethylbenzoyl diphenylphosphineoxide and bis (2,6-dimethoxybenzoyl)-2,4,4-trimethylpentylphosphineoxide; α-aminoacetophenones such as 2-benzyl-dimethylamino-1-(4-morpholinophenyl)-butanone-1,2-benzyl-diethyl-amino-1-(4-morpholi nophenyl) propanone-1; ketals such as benzyldimethylketal, benzyldiethylketal and benzyl (2-methoxyethylketal); titanocenes such as bis (cyclopentadienyl)-bis [2,6-difluoro-3-(1-pyrolyl) phenyl] titanium, bis (cyclopentadienyl)-bis (pentanefluorophenyl) titanium and bis (cyclopentadienyl)-bis (2,3,5,6-tetrafluoro-4-disiloxyphenyl)-titanium.

Examples of the aforementioned photopolymerization promotors may include tetriary amines such as N,N-dimethylaniline, N,N-diethylaniline, N,N-di-n-butylaniline, N,N-dibenzylaniline, p-N,N-dimethyl-toluidine, m-N,N-dimethyltoluidine, p-N,N-diethyltoluidine, p-bromo-N,N-dimethylaniline, m-chloro-N,N-dimethylaniline, p-dimethylaminobenzaldehyde, p-dimethylaminoacetophenone, p-dimethylaminobenzoic acid, p-dimethylaminobenzoicacid ethyl ester, p-demtethylaminobenzoic acid amino ester, N,N-dimethylanthranilic acid methyl ester, N,N-dihydroxyethylaniline, p-N,N-dihydroxyethyl-toluidine, p-dimethylaminophenylalcohol, p-dimethylaminostyrene, N,N-dimethyl-3,5-xylidine, 4-dimethylaminopyridine, N,N-dimethyl-α-naphthylamie N,N-dimethyl-β-naphthylamine, tributylamine, tripropylamine, triethylamine, N-methyldiethanolamine, N-ethyldiethanolamine, N,N-dimethylhexylamine, N,N-dimethyldodecylamine, N,N-dimethylstearylamine, N,N-dimethylaminoethyl methacrylate, N,N-diethylaminoethyl methacrylate and 2,2'-(n-butylimino) diethanol; secondary amines such as N-phenylglycine; barbituric acids such as 5-butylbarbituric acid and 1-benzyl-5-phenylbarbituric acid; tin compounds such as dibutyltin diacetate, dibutyltin dilaurate, dioctyltin dilaurate, dioctyltin diperacetate, dioctyltin bis(mercaptoacetic acid isooctyl ester) salt and tetramethyl-1,3-diacetoxydistannoxane; aldehyde compounds such as laurylaldehyde and terephthalaldehyde; sulfur-containing compounds such as dodecylmercaptan, 2-mercaptobenzooxazole, 1-decanethiol and thiosalicylic acid.

An oxycarboxylic acid such as citric acid, maleic acid, tartaric acid, glycolic acid, gluconic acid, α-oxyisobutyric acid, 2-hydroxypropioic acid, 3-hydroxybutanoic acid, 4-hydroxybutanoic acid, and dimethylolpropioic acid may be included in order to improve the photopolymerization promoting ability.

These polymerization initiator may be used alone or as a mixture of two or more thereof. These polymerization initiator may be used alone or as a mixture of two or more thereof. The amount of a polymerization initiator to be added may be appropriately determined depending upon the use.

The dental material may be colored with a coloring pigment in accordance with a product property. The coloring pigments are classified into inorganic pigments and organic pigments. Examples of inorganic pigments may include chromates such as chrome yellow, zinc yellow and barium yellow; ferrocyanides such as Prussian blue; sulfides such as vermilion, cadmium yellow, zinc sulfide, antimony white and cadmium red; sulfates such as barium sulfate, zinc sulfate and strontium sulfate; oxides such as zinc white, titanium white, blood red, black iron oxide and chromium oxide; hydroxides such as aluminum hydroxide; silicates such as calcium silicate and ultramarine; and carbons such as carbon block and graphite. Examples of organic pigments may include nitoroso pigments such as Naphthol Green B and Naphthol Green Y; nitoro pigments such as Naphthol S and Lithol Fast Yellow 2G; insoluble azo pigments such as Permanent Red 4R, Brilliant Fast Scarlet, Hanza Yellow and Benzidine Yellow; poorly-soluble azo pigments such as Lithol Red, Lake Red C and Lake Red D; soluble azo pigments such as Brilliant Caramine 6B, Permanent Red F5R, Pigment. Scarlet 3B and Bordeaux 10B; phthalocyanine pigments such as Phthalocyanine Blue, Phthalocyanine Green and Sky Blue; basic dye pigments such as Rhodamine Lake, Malachite Green Lake and Methyl Violet Lake; and acidic dye pigments such as Peacock Blue Lake, Eosin Lake and Quinoline Yellow Lake. These pigments may be used alone or in combination of two or more thereof. In the preferable embodiment of the present invention, the coloring pigment is an inorganic pigment, preferably titanium white, blood red, black iron oxide or yellow iron oxide.

Preferably, the dental material may contain an ultraviolet absorber such as 2-hydroxy-4-methylbenzophenone, a polymerization inhibitor such as hydroquinone, hydroquinone monomethyl ether, 2,5-ditert-butyl-4-methylphenol or butylated hydroxytoluene (BHT),a discoloration inhibitor, an antibacterial agent, or other conventionally known additive.

In the dental syringe of the above embodiment, the contour of the operating portion formed at one end of the pushout rod has a size that surrounds the contour of the syringe body in the plane perpendicular to the longitudinal direction of the syringe body. Therefore, in the above embodiment, the operating portion has less directionality in the circumferential direction of the outer circumference surface, that is, in the plane perpendicular to the longitudinal direction of the syringe body, than in the syringe body. Thus, in the case of performing the rotating operation of the operating portion, it is not necessary to check the direction of extension of the flat plate shape operating portion by visually or by groping, and to move the hand according to the direction of extension of the flat plate shape operating portion. Since the contour of the operating portion has a size that surrounds the contour of the syringe body, there is no need to grasp the area around the center of rotation of the operating portion. Therefore, there is no need to move the operating position from a portion near the center of rotation of the operating portion to a portion away from the center of rotation. Thus, the dental syringe of the above embodiment can perform intuitive and smooth rotating operation of the operating portion to facilitate the rotating operation.

In the dental syringe of the above embodiment, the side surface of the operating portion has a circumferential surface part. As a result, the operating portion is no longer directional in the circumferential direction of the outer circumferential surface, and the rotating operation can be performed more easily because the start of the operation can be easily performed without worrying about the circumferential directionality of the operating portion in the case of operating the operating portion.

In the dental syringe of the above embodiment, the side surface of the operating portion further comprises a flat surface part. By providing such a flat surface portion, it is possible to prevent the hand operating the operating portion from slipping during the rotating operation of the operating portion. Therefore, it is possible to finely control the amount of rotation. Further, it is possible to display information on the product of the dental syringe on the operating portion in an easy-to-see manner by displaying information on the product of the dental syringe on the flat surface part. Furthermore, by providing the flat surface part, the rolling of the dental syringe can be stopped by the operating portion in the case that the dental syringe is placed so that the longitudinal direction of the syringe body is parallel to the surface on which the syringe body is placed.

In the dental syringe of the above embodiment, at least a part of the flat surface part of the side surface of the operating portion has a different color from the circumferential surface part. Therefore, it is possible to improve the aesthetics of the dental syringe and to display information about the product of the dental syringe by color to increase the amount of information about the dental syringe to be displayed.

In the dental syringe of the above embodiment, the circumferential surface part of the side surface of the operating portion is provided with wrinkle-process. Therefore, it is possible to further suppress the slipping of the hand operating the operating portion during the rotating operation of the operating portion.

In the dental syringe of the above embodiment, the operating portion comprises the flat surface part at one end opposite to the nozzle side in the longitudinal direction of the syringe body. Therefore, it is also possible to display information on the product of the dental syringe on this flat surface part, and it is possible to display information on the product of the dental syringe on the operating portion in a multifaceted and easy-to-see manner. Further, it is possible to increase the amount of information on the product of dental syringes to be displayed.

In the dental syringe of the above embodiment, the connecting portion is provided between the pushout rod and the operating portion. By providing such the connecting portion, the root portion of the pushout rod is supported to prevent the root portion of the pushout rod from being deformed by the force applied during the rotating operation of the operating portion.

In the dental syringe of the above embodiment, the side surface of the syringe body does not have a corner. Therefore, it is possible to improve the aesthetics of the dental syringe, and it is possible to suppress the decrease of the gripping property of the syringe body to easily perform the rotating operation.

In the dental syringe of the above embodiment, in particular, the side surface of the syringe body consists only of a circumferential surface. Therefore, it is possible to further improve the aesthetics of the dental syringe, and it is possible to perform the rotating operation more easily.

In the dental syringe of the above embodiment, the syringe body is provided with the cap member. Therefore, unintended leakage of the contents of the dental syringe can be prevented.

In the dental syringe of the above embodiment, in particular, the cap member has a flat surface part perpendicular to the longitudinal direction of the syringe body in the state of being attached to the syringe body. Therefore, the dental syringe may be placed on the flat surface of the cap member as if it were standing on the bottom of the syringe.

In the dental syringe of the above embodiment, in particular, the cap member has a flat surface part on the side surface in the state of attaching the cap member to the syringe body. Therefore, in the case of placing the dental syringe so that the longitudinal direction of the syringe body is parallel to the surface on which the syringe body is placed, the rolling of the dental syringe may be stopped by the cap member.

In the dental syringe of the above embodiment, the side surface of the operating portion may be configured to have an n-square (where n is an integer of 5 or more) shape. With this configuration, the shape of the side surface of the operating portion approximates the shape of the circumferential surface part. Therefore, the operating portion can be more easily rotated, because there is no longer directionality on the operating portion in the outer circumferential direction, and the start of operation can be easily performed without worrying about the circumferential directionality of the operating portion in operating the operating portion.

In the dental syringe of the above embodiment, the dental material containing an acrylic polymerizable monomer and an inorganic filler is filled into the syringe body. By filling the syringe body with the dental material, the dental syringe can be used immediately.

In the above embodiment, the syringe body 2 is divided into the body portion 21 and the tip 22 to be constructed. However, the whole of the syringe body 2 can be constructed as a single unit.

In the above embodiment, the body portion 21 has a cylindrical shape in which the side surface of the syringe body consists of only the circumferential surface. However, the body portion 21 may be configured in a shape other than a circumferential surface, and the body 21 may also have a corner.

In the above embodiment, the side surface of the body portion 21 is provided with wrinkle-process, but the side surface of the body portion 21 may be smooth surfaces.

In the above embodiment, the syringe body 2 is configured so that the side surface does not have unevenness, but the side surface may be formed with unevenness.

In the above embodiment, the side surface of the tip 22 is provided with wrinkle-process, but the side surface of the tip 22 may be a smooth surface.

In the above embodiment, the cap member 6 is provided, but the cap member 6 may not be provided.

In the above embodiment, the cap member 6 is attached by the attachment member 7, but the cap member may be attached by a member other than the attachment member 7.

In the above embodiment, the tip 22 is formed with the engagement portion 224 and the bulge portion 225, but engagement 224 and the bulge portion 225 may not be formed.

In the above embodiment, the cap member 6 is provided with wrinkle-process on the side surface that is substantially the same diameter as the side surface of the tip 22 of the syringe body 2, but this side surface may be a smooth surface.

In the above embodiment, the cap member 6 is formed with the engagement portion 64 and the bulge portion 65, but the engagement portion 64 and the bulge portion 65 may not be formed.

In the above embodiment, the operating portion 32 comprises the flat surface part 321 at the end portion of the other end side (pushout rod 3 side) in the longitudinal direction of the body portion 21, but the end portion of the other end side (pushout rod 3 side) of the body portion 21 in the longitudinal direction may not be plane surface.

In the above embodiment, the operating portion 32 has the circumferential surface part 323 and the flat surface part 324 on the side surface 323, but the operating portion 32 may consist of only the circumferential surface part 323 or only the flat surface portion 324.

In the above embodiment, the circumferential surface part 323 and the flat surface part 324 have different colors from each other but may have the same color.

In the above embodiment, the operating portion 32 comprises the body portion 325 and the cap 326 for operating portion, but it may not have the cap 326 for operating portion.

With respect to the use of substantially any plural and/or singular terms herein, those having skill in the art can translate from the plural to the singular and/or from the singular to the plural as is appropriate to the context.

Although the description herein has been given with reference to the drawings and embodiments, it should be noted that those skilled in the art may make various changes and modifications on the basis of this disclosure without difficulty. Accordingly, any such changes and modifications are intended to be included in the scope disclosure the embodiments.

### Industrial applicability

The dental syringe of the present invention can perform intuitive and smooth rotating operation of the operating portion to facilitate the rotating operation.

### Reference Signs List

1: syringe
2: syringe body
21: body portion
211: housing portion
212: male screw
213: female screw
22: tip
221: nozzle
222: tip-side housing portion
223: female screw
224: engagement portion
225: bulge portion
226: connecting surface
3: pushout rod
31: threaded portion
32: operating portion
321: flat surface part
322: side surface
323: circumferential surface part
324: flat surface part
325: body portion
325a: concave portion
326: cap for operating portion
326a: disk portion
326b: flat plate-shaped portion
33: protruding portion
4: dental material
5: 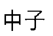
6: cap member
61: opening
62: flat plate portion
621: plane surface
622: bulge portion
63: housing portion
64: engagement portion
65: bulge portion
66: concave portion
67: flat surface part of side surface side
7: attachment member
71: first attachment member
72: second attachment member

## Claims

1. A dental syringe comprising a syringe body and a pushout rod, wherein
the syringe body is provided with a nozzle for discharging a dental material,
one end of the pushout rod is formed with an operating portion for rotating the pushout rod, and
in a plane perpendicular to the longitudinal direction of the syringe body, the contour of the operating portion has a size that surrounds the contour of the syringe body.

2. The dental syringe according to claim 1, wherein
the operating portion includes a side surface, and
the side surface has a circumferential surface part.

3. The dental syringe according to claim 2, wherein
the side surface of the operating portion further has a flat surface part.

4. The dental syringe according to claim 3, wherein
at least a part of the flat surface part of the side surface of the operating portion has a different color from a color of the circumferential surface part.

5. The dental syringe according to claim 3, wherein
the circumferential surface part of the side surface of the operating portion is provided with wrinkle-process.

6. The dental syringe according to any one of claims 1 to 5, wherein
the operating portion has a flat surface part at one end on the opposite side of the nozzle side in the longitudinal direction of the syringe body.

7. The dental syringe according to any one of claims 1 to 6, wherein
a connecting portion is provided between the pushout rod and the operating portion.

8. The dental syringe according to claim 1, wherein
the side surface of the syringe body does not have a corner.

9. The dental syringe according to claim 1, wherein
the side surface of the syringe body consists only of a circumferential surface.

10. The dental syringe according to any one of claims 1 to 9, wherein
the syringe body is provided with a cap member.

11. The dental syringe according to claim 10, wherein
the cap member comprises a flat surface part perpendicular to the longitudinal direction of the syringe body in the state of attaching the cap member to the syringe body.

12. The dental syringe according to claim 10, wherein
the cap member comprises a flat surface part on the side surface in the state of attaching the cap member to the syringe body.

13. The dental syringe according to claim 1, wherein
the side surface of the operating portion has an n-square shape, where n is an integer of 5 or more.

14. The dental syringe according to any one of claims 1 to 13, wherein
the syringe body is filled with a dental material containing an acrylic polymerizable monomer and an inorganic filler.
